# EUROPÄISCHE PATENTSCHRIFT

(11) **EP 1 557 378 B1**
(45) Veröffentlichungstag und Bekanntmachung des Hinweises auf die Patenterteilung: **30.05.2007**
(21) Anmeldenummer: 04105953.6
(22) Anmeldetag: 22.11.2004
(51) Int. Cl.: B65G 15/00, B62D 65/18

(54) **Transportband, insbesondere zur Verwendung als Werkerband**
Conveyor belt, particularly used as assembly conveyor
Convoyeur à courroie, particulièrement utilisé comme convoyeur de montage

(30) Priorität: 20.01.2004 DE 102004002738
(43) Veröffentlichungstag der Anmeldung: 27.07.2005
(73) Patentinhaber: ContiTech Transportbandsysteme GmbH, 30165 Hannover (DE)
(72) Erfinder: Möschen, Michael, 37124 Rosdorf (DE)

(56) Entgegenhaltungen:
- EP-A- 1 016 585
- DE-A1- 4 226 826

## Beschreibung

Die Erfindung betrifft ein Transportband, insbesondere zur Verwendung als Werkerband in der Automobilindustrie, - gemäß dem Oberbegriff des Anspruchs 1.

### Stand der Technik

Vormontierte Karosserien von Pkws bis hin zu nahezu fertigen Pkws werden für die Weiter- bzw. Endverarbeitung auf sog. Flurförder-Anlagen bzw. -Elemente gestellt. Bei diesen Transportmitteln handelt es sich üblicherweise um sogenannte Schubplattformen auf "Laufrädern", Metall- oder Kunststoff-Gliederbändern und gleitend abgebogenen Transportbändern aus Gummi oder Kunststoff (sog. Werkerbänder, Spurgleit- und Skidgleitgurte). Der Obertrum der Transportbänder wird entweder von Rollen getragen oder ihre Laufseite weist eine Gleitlage insbesondere auf der Basis textilen Materials auf, mit deren Hilfe sie auf einem ortsfesten Gleittisch entlang gleiten können. "Endseitig" weisen derartige Transportbänder mindestens eine Antriebs- und mindestens eine Spanntrommel auf. Eventuell können Umlenk- und Einschnürrollen vorgesehen sein. Der Betrieb kann ausschließlich vorwärts, aber auch reversierend erfolgen. Die Förderung ist in sämtlichen Richtungen (waagerecht, senkrecht, ansteigend oder abfallend) möglich.

Um ein bequemes Arbeiten auf den Transportbändern (bzw. -anlagen) zu ermöglichen, sind speziell in der Automobilindustrie als Scherentische ausgebildete sogenannte Hubeinheiten extra auf einzelnen Schubplattformeinheiten angeordnet, die mit den jeweiligen Platten der Mitfahrplattenstraße mitbewegt werden. An jedem Scherentisch sind Betätigungseinrichtungen zur Höheneinstellung für die Kfz-Rohkarosserien oder teilmontierten Pkws vorhanden. Der Rücklauf der Platten geschieht entweder durch Absenken in einen tiefen Keller und Rückführung oder in der gleichen Ebene durch zweimal rechtwinkliges Schwenken der Platten.
Die Mitfahrplatten selbst bestehen aus Holz. Daraus ergeben sich Nachteile wie Verfärbung, Quellen usw.. Es erübrigt sich zu sagen, dass die auf die Mitfahrplatten aufstellbaren Scherentische ziemlich aufwendig gebaut sind. Ihre Bedienung und insbesondere die Rückführung der Mitfahrplatten nebst Scherentische kann nur umständlich durchgeführt werden.

Darüber hinaus gibt es Anwendungen, wo Scherentische direkt auf Werkerbändern stehen. Aber auch in diesem Fall sind die Scherentische nach Durchlaufen der Arbeitsstrecke von den Werkerbändern abzunehmen und in einer anderen Ebene oder seitlich an den Anfang der Laufstrecke zurückzuführen und wieder auf das Band zu stellen.

### Aufgabe der Erfindung

Die Aufgabe der Erfindung besteht deshalb darin, eine praktikablere Lösung für eine ergonomische Höhenanpassung des Montagegutes auf einem Werkerband vorzuschlagen und ein separates Rückführen der Höhenverstelleinheit zu vermeiden.

### Lösung und Vorteile

Die Aufgabe wird im Wesentlichen mit den Merkmalen des Anspruchs 1 gelöst; die Unteransprüche nennen bevorzugte Details und Weiterbildungen.

Der erfindungsgemäße Vorschlag sieht vor, dass auf dem Band befindliche Hubeinheiten auf dem Band befestigt und zwecks Rückführung in dem Untertrum einfaltbar sind, so dass sie trotz Befestigung auf dem Band "umlauffähig" sind. Aus diesem Grunde brauchen die einzelnen Hubeinheiten nicht separat zurückgeführt zu werden.

Dies ist insbesondere dann der Fall, wenn die Hubeinheiten aufblasbare Luftkissen sind, die aus Gummi oder elastomerem Material bestehen.

Zwecks Anhebung von Automobilkarosserien können die Luftkissen am Anfang der Montagestrecke mit Druckluft beaufschlagt werden. Am Ende des Arbeitsweges wird vor dem Rücklauf um die Antriebsrolle die Luft aus den Luftkissen abgelassen, so dass problemlos ein Rücktransport mit dem Untertrum stattfinden kann.

Wenn das Volumen des jeweiligen Luftkissens in mehrere horizontale Kammern unterteilt ist, lässt sich bequem (fast) jede gewünschte Arbeitshöhe einstellen.
Das Hubkissen kann z. B. in 50 mm Stufen innerhalb von 10 sec auf insgesamt 300 mm Höhe herausgefahren werden.
Zur Erhöhung der Stabilität können die einzelnen Luftkissen mit einem klappbaren (Stahl-)Gestell bzw. Rahmen versehen sein.

In den einzelnen elastomeren Hubkissen kann ein elektrischer Anschluss integriert werden.

Die Stromversorgung ist durch ein angegossenes Kabel im Gurt oder evtl. induktiv möglich. Eine Bodensteckdose kann mittels kleinem Elastomerblock auf dem Gurt montiert werden.

Hubkissen (Luftkissen) sind nicht nur einfacher zu handhaben sondern zudem schätzungsweise 50% preiswerter als auf den Schubplattformen angeordnete Scherentische.
Verglichen mit Mitfahrplatten hat das elastische Transportband bezüglich feuchter Medien eine bessere Standfestigkeit. Auch ist für die Werker eine bessere Dämpfung auf der Elastomerunterlage vorhanden.
Ein Hubkissen wird wahlweise alle 8 m angeordnet. Die Werkermitfahrbänder werden bis zu 160 m Achsabstand eingesetzt. An einer Hubkissenstation können ein oder mehrere Hubkissen angeordnet sein.

### Zeichnungen

Ein Ausführungsbeispiel des erfindungsgemäßen Transportbandes und ein Beispiel gemäß dem als nächstkommend angesehenen Standes der Technik ist in den Zeichnungen dargestellt und wird anschließend näher beschrieben, Es zeigt.
Fig. 1a die Prinzipdarstellung eines erfindungsgemäßen Transportbandes von der Seite betrachtet;
Fig. 1b dasselbe Transportband als Querschnitt dargestellt (Draufsicht A-A); und
Fig. 2 die Prinzipdarstellung eines Transportbandes gemäß dem Stand der Technik, ebenfalls von der Seite betrachtet;
Fig. 3 den Querschnitt durch ein Hubkissen mit speziell ausgebildeter Grundfläche;
Fig. 4 den Querschnitt durch ein in mehrere horizontale Kammern unterteiltes Hubkissen und
Fig. 5 ein klappbares Gestell (Rahmen für Hubkissen).

### Beschreibung

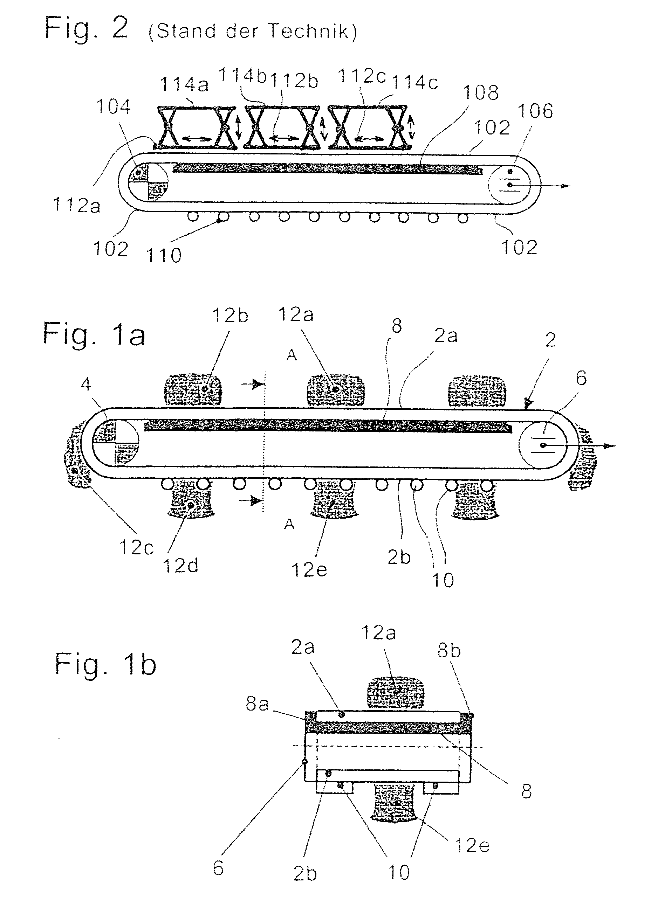

Die in Fig. 2 dargestellte herkömmliche Anordnung (siehe auch "Stand der Technik") besteht aus einem endlosen, als sogenanntes "Werkerband" dienendes Transportband 102, das über zwei Trommeln 104, 106 läuft, von denen die eine eine Antriebstrommel 104 und die am entgegengesetzten "Ende" angeordnete Trommel eine Spanntrommel 106 ist. Der vorlaufende Abschnitt (Obertrum) des Werkerbandes 102 wird von einem Gleittisch 108, der zurücklaufende Abschnitt (Untertrum) des Werkerbandes 102 wird von Tragrollen 110 unterstützt. Auf dem Obertrum sind plattenähnliche Teile 112a, ... angebracht, auf denen sich jeweils ein Scherentisch 114a, ... befindet. Die Scherentische dienen zur Höheneinstellung darauf mitbewegter Kfz-Rohkarosserien, bis hin zu fast fertigen Pkws.

Das in Fig. 1 dargestellte Ausführungsbeispiel der Erfindung weist im Wesentlichen denselben Grundaufbau auf: Ein endloses, als "Werkerband" dienendes Transportband 2 läuft über zwei Trommeln 4, 6, von denen die eine als Antriebstrommel 4 dient und die andere eine Spanntrommel 6 ist. Der vorlaufende Abschnitt (Obertrum 2a) wird auch hier von einem Gleittisch 8 unterstützt, während der zurückkehrende Abschnitt (Untertrum 2b) des Werkerbandes 2 über Tragrollen 10 läuft.

Im vorliegenden Ausführungsbeispiel dient das Werkerband 2 als Gleitgurt. Es ist aber durchaus auch denkbar, dass zwischen Werkerband 2 und Gleittisch 8 ein als sogenannter Verschleißgurt mitlaufender Gleitgurt zwischengeschaltet wird.

Erfindungswesentlich ist, dass das Transportband 2 mit neuartigen Hubeinheiten 12a, ... versehen ist. Im dargestellten Ausführungsbeispiel sind die Hubeinheiten 12a, ... aufblasbare Luftkissen, die mit dem Transportband 2 fest verbunden sind. Aus dieser Abbildung geht weiter hervor, dass die momentan oberhalb des Obertrums 2a des Transportbandes 2 befindlichen Luftkissen 12a, 12b aufgeblasen sind, während sie, wenn sie sich im Bereich der Antriebs- 4, der Spanntrommel 6 und unterhalb des Untertrums 2b des Transportbandes 2 befinden, abgelassen sind und schlapp herunterhängen.

Um die Luftkissen 12a, ... "umlauffähig" zu machen, braucht nur relativ wenig Luft aus den sonst prall gefüllten Luftkissen 12a, ... abgelassen zu werden.
Das Auffüllen bzw. das Nachfüllen mit Druckluft am Anfang der Werkerstrecke kann über einen extern bereitgehaltenen Druckschlauch im Bereich der Bestückung erfolgen.
Es ist aber auch denkbar, dass die einzelnen Luftkissen 12a, ... jeweils einen kleinen mitgeführten Kompressor aufweisen, die z. B. über Schleifkontakte oder Induktionsschleifen mit Strom versorgt werden.

Wie aus Fig. 1b hervorgeht, ist der Gleittisch 8 zur seitlichen Führungsbegrenzung des Transportbandes 2 mit Seitenleisten 8a, 8b versehen. Die weiteren, hier dargestellten Details weisen dieselben Bezugszeichen wie in Fig. 1a auf, so dass es sich erübrigt, erneut hierauf einzugehen.

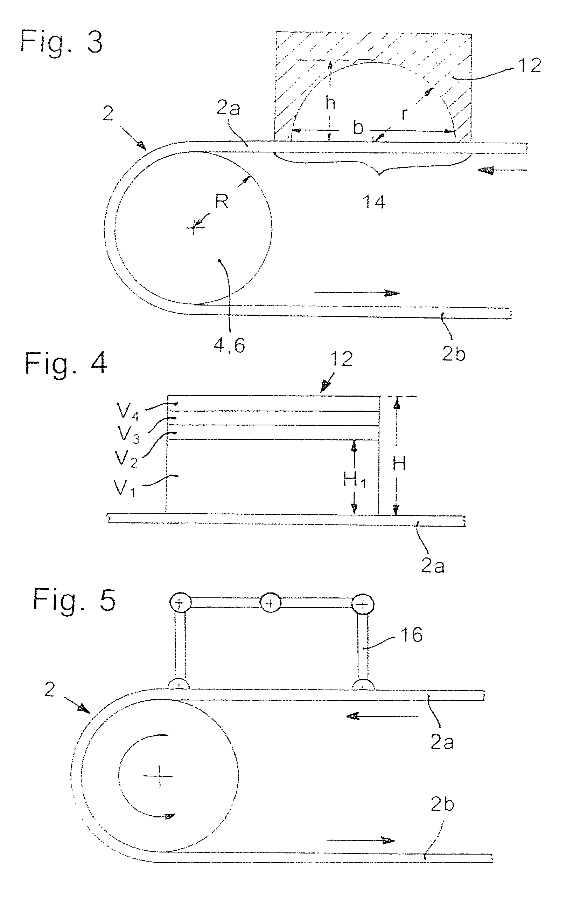

Der in Fig. 3 dargestellte Ausschnitt zeigt ein Band 2 mit einer Umlenktrommel (Antriebs-4 oder Spanntrommel 6). Als Hubeinheit 12 befindet sich auf dem Obertrum 2a des Bandes 2 ein speziell ausgebildetes Hubkissen (Luftkissen): Die Grundfläche 14 dieses Hubkissens 12 weist eine konkave Einsattlung auf. Höhe h und Breite b (bzw. Radius r) der Einsattelung sind so dimensioniert, dass das Hubkissen 12 um die Trommel 4 bzw. 6 geführt werden kann, ohne dass Luft aus dem Hubkissen 12 abgelassen werden müsste. Auch falls die Größe h, b der an der Grundfläche 14 des Hubkissens 12 befindliche Einsattelung nicht völlig ausreichen sollte, die endseitige Umlenktrommel 4 bzw. 6 ohne Deformation zu umrunden, so würde bereits ein nur teilweises Luftablassen genügen, um eine hinreichende Anpassung an den Krümmungsradius R der Trommeln 4 und 6 zu erreichen.

Die in der Fig. 4 dargestellte Hubeinheit 12 ist ebenfalls ein fest auf dem Band 2 angebrachtes Luftkissen. Die Besonderheit dieses Luftkissens 12 besteht in einer mehrfachen horizontalen Unterteilung des Luftkissen-Volumens V in horizontale Teilvolumina V₁, .... Der Zweck einer solchen Unterteilung in Teilräume V₁, ... besteht nicht nur in der Erzielung einer größeren Stabilität sondern auch in der Einstellbarkeit einer beliebigen Hubhöhe H und damit in einer Einstellbarkeit jeder gewünschten Arbeitshöhe. Weisen die einzelnen Kammern V₁, ... die Höhen von 1, 2, 4 und 8 Einheiten auf, so lassen sich bereits mit diesen vier Kammerhöhen H₁, H₂, H₃ und H₄ insgesamt 15 verschiedene Höhen H einstellen. (Von 1 bis 15 in Einser-Schritten.)
Alternativ weist das Luftkissen 12 eine große Kammer V₁ zur Einstellung der Hauptarbeitshöhe H₁ auf, während die Feinanpassung der Höhe H mit Hilfe kleiner, z. B. dreier, Teilvolumina V₂, V₃, V₄ realisiert werden kann.

Die Fig. 5 zeigt ergänzend ein auf dem Band 2 befindliches Gestell 16. Seine besonderen Merkmale bestehen darin, dass es ebenfalls auf dem Band 2 befestigt und in der Weise klappbar ist, dass es problemlos um die endseitigen Trommeln (Antriebs- und Umlenktrommel) 4 und 6 geführt werden kann.
Dieses Gestell 16 kann entweder als Stabilisierungsrahmen für ein Luftkissen 12 dienen oder aber auch eigenständige Arbeitsunterlage ohne Hubfunktion (ohne Luftkissen 12) sein.

### Bezugszeichenliste

a) *Stand der Technik*
   - 102: Transportband ("Werkerband")
   - 104, 106: Trommeln
   - 104: Antriebstrommel
   - 106: Spanntrommel
   - 108: Gleittisch
   - 110: Tragrolle(n)
   - 112a, ...: plattenähnliche Teile, Platte(n) (einer Mitfahrplattenstraße)
   - 114a, ...: Scherentisch(e)
b) *Erfindung*
   - 2: Transportband ("Werkerband"), Band
   - 2a: Obertrum (des Transportbandes)
   - 2b: Untertrum (des Transportbandes)
   - 4: Antriebstrommel, -rolle
   - 6: Spanntrommel, -rolle
   - 8: Gleittisch
   - 8a, 8b: Seitenleiste(n) des Gleittisches
   - 10: Tragrolle(n)
   - 12; 12a, ...: Hubeinheit(en), Hubkissen, Luftkissen
   - 14: Grundfläche eines Hubkissens
   - V: Volumen eines Hubkissens
   - V₁,...: Kammern eines Hubkissens (Mehrkammerhubkissen), Teilvolumen eines Hubkissens, Teilräume, Kammer(n)
   - h, b, r: Höhe, Breite, Radius einer Einsattelung
   - H; H₁, ...: Hubhöhe eines Luftkissens, Arbeitshöhe
   - 16: "umlauffähiges" Gestell, "umlauffähiger" Rahmen
   - R: Krümmungsradius der Trommeln

## Patentansprüche

1. Transportbandanlage mit einem endlosen elastischen Transportband (2) aus Gummi oder Kunststoff, das umlaufend gleitend und/oder mittels Tragrollen (10) rollend abgetragen ist,
- mit mindestens einer Antriebs- (4) und mindestens einer Spanntrommel (6);
- sowie evtl. mit Umlenk- und Einschnürrollen;
- vorwärts oder reversierend betreibbar;
- waagerecht, ansteigend oder abfallend fördernd,
wobei die Tragseite des Transportbandes (2) mit mindestens einer Hubeinheit (12a, ...) versehen ist,
**dadurch gekennzeichnet,**
**dass** die mindestens eine Hubeinheit (12a...) auf dem Transportband befestigt ist und mit diesem umläuft,
**dass** die mindestens eine Hubeinheit (12a...) zwecks Rückführung entlang dem Untertrum (2b) des Transportbandes (2) einfaltbar ist.

2. Transportbandanlage nach Anspruch 1,
**dadurch gekennzeichnet,**
**dass** die mindestens eine Hubeinheit (12a, ...) ein aus Gummi oder elastomerem Material bestehendes Luftkissen ist.

3. Transportbandanlage nach Anspruch 2,
**dadurch gekennzeichnet,**
**dass** während des Betriebs des Transportbandes (2) Druckluft in das mindestens eine Luftkissen (12a,...) auffüllbar oder ablassbar ist.

4. Transportbandanlage nach einem der Ansprüche 2 bis 3,
**dadurch gekennzeichnet,**
**dass** das mindestens eine auf dem Transportband (2) befindliche Luftkissen (12a...) während des Zustands als Obertrum (2a) aufgeblasen ist, während es im Bereich der Antriebs- (4) und/oder der Spanntrommel (6) und im Zustand als Untertrum (2b) abgelassen oder flach angesaugt ist.

5. Transportbandanlage nach einem der Ansprüche 2 bis 4,
**dadurch gekennzeichnet,**
**dass** die Grundfläche (14) des mindestens einen Luftkissens (12a, ...) eine konkave Einsattelung aufweist,
wobei Höhe (h) und Breite (b) und/oder Radius (r) der Einsattelung so dimensioniert sind, dass das mindestens eine Luftkissen (12a, ...) um die Trommeln (4 und 6) geführt werden kann, ohne dass Luft aus dem mindestens einen Luftkissen (12a,...) abgelassen werden müsste.

6. Transportbandanlage nach einem der Ansprüche 2 bis 5,
**dadurch gekennzeichnet,**
**dass** das Volumen (V) des mindestens einen Luftkissens (12a, ...) in mehrere horizontale Kammern (V₁...), die einzeln mit Druckluft beaufschlagbar sind, unterteilt ist.

7. Transportbandanlage nach einem der Ansprüche 1 bis 6,
**dadurch gekennzeichnet,**
**dass** die mindestens eine Hubeinheit (12a,...) einen in seiner Höhe einfaltbaren Rahmen (16) aufweist.

8. Transportbandanlage nach einem der Ansprüche 6 bis 7,
**dadurch gekennzeichnet,**
**dass** eine feste Hubposition programmierbar oder eine individuelle Hubveränderung an jedem Arbeitsschritt einstellbar ist.

9. Transportbandanlage nach einem der Ansprüche 1 bis 8,
**dadurch gekennzeichnet,**
**dass** das Transportband (2) Teil einer Spurgleit- oder Werkerbandanlage ist.

## Claims

1. Transport belt system having an endless elastic transport belt (2) which is made from rubber or plastic and is supported in a circumferentially sliding manner and/or in a rolling manner by means of carrying rollers (10),
- having at least one drive drum (4) and at least one tensioning drum (6);
- and possibly having deflection rollers and constricting rollers;
- in a manner which can be operated in a forward or reversing direction;
- in a manner which conveys objects horizontally, up a slope or down a slope,
the carrying side of the transport belt (2) being provided with at least one lifting unit (12a...),
**characterized**
**in that** the at least one lifting unit (12a...) is fastened on the transport belt and circulates with the latter, and
**in that** the at least one lifting unit (12a...) can be folded in for the purpose of the return along the lower run (2b) of the transport belt (2).

2. Transport belt system according to Claim 1, **characterized in that** the at least one lifting unit (12a,...) is an air cushion which consists of rubber or an elastomeric material.

3. Transport belt system according to Claim 2, **characterized in that**, during operation of the transport belt (2), compressed air can be filled into or discharged from the at least one air cushion (12a,...).

4. Transport belt system according to either of Claims 2 and 3, **characterized in that** the at least one air cushion (12a...) which is situated on the transport belt (2) is inflated during the state as upper run (2a), while it is discharged or sucked flat in the region of the drive drum (4) and/or the tensioning drum (6) and in the state as lower run (2b).

5. Transport belt system according to one of Claims 2 to 4, **characterized in that** the base face (14) of the at least one air cushion (12a,...) has a concave dip, the height (h) and width (b) and/or radius (r) of the dip being dimensioned in such a way that the at least one air cushion (12a,...) can be guided around the drums (4 and 6), without air having to be discharged from the at least one air cushion (12a,...).

6. Transport belt system according to one of Claims 2 to 5, **characterized in that** the volume (V) of the at least one air cushion (12a,...) is divided into a plurality of horizontal chambers (V₁...) which can be loaded individually with compressed air.

7. Transport belt system according to one of Claims 1 to 6, **characterized in that** the at least one lifting unit (12a, ...) has a frame (16) which can be folded in vertically.

8. Transport belt system according to either of Claims 6 and 7, **characterized in that** a fixed lifting position can be programmed or an individual lifting change can be set at each working step.

9. Transport belt system according to one of Claims 1 to 8, **characterized in that** the transport belt (2) is part of a sliding-track or worker belt system.

## Revendications

1. Installation de bande de transport comprenant une bande de transport élastique sans fin (2) en caoutchouc ou en plastique, qui est entraînée en circulation par glissement et/ou par roulement au moyen de rouleaux de support (10),
- comprenant au moins un tambour d'entraînement (4) et au moins un tambour de serrage (6) ;
- ainsi qu'éventuellement des rouleaux de renvoi et d'étranglement ;
- pouvant être entraînée vers l'avant ou dans le sens inverse ;
- avançant horizontalement, en montée ou en descente,
le côté de support de la bande de transport (2) étant pourvu d'au moins une unité de levage (12a...),
**caractérisée en ce que**
l'au moins une unité de levage (12a...) est fixée sur la bande de transport et est entraînée avec celle-ci,
**en ce que** l'au moins une unité de levage (12a...) peut être repliée en vue de son renvoi le long du tronçon inférieur (2b) de la bande de transport (2).

2. Installation de bande de transport selon la revendication 1,
**caractérisée en ce que**
l'au moins une unité de levage (12a,...) est un coussin d'air en caoutchouc ou en matériau élastomère.

3. Installation de bande de transport selon la revendication 2,
**caractérisée en ce que**
pendant le fonctionnement de la bande de transport (2), de l'air comprimé peut être introduit dans l'au moins un coussin d'air (12a, ...) ou évacué de celui-ci.

4. Installation de bande de transport selon l'une quelconque des revendications 2 à 3,
**caractérisée en ce que**
l'au moins un coussin d'air (12a...) se trouvant sur la bande de transport (2) est gonflé dans l'état sous forme de tronçon supérieur (2a), tandis que dans la région du tambour d'entraînement (4) et/ou du tambour de serrage (6) et dans l'état sous forme de tronçon inférieur (2b), il est vidé ou aspiré à plat.

5. Installation de bande de transport selon l'une quelconque des revendications 2 à 4,
**caractérisée en ce que**
la surface de base (14) de l'au moins un coussin d'air (12a,...) présente un approfondissement concave,
la hauteur (h) et la largeur (b) et/ou le rayon (r) de l'approfondissement étant dimensionnés de telle sorte que l'au moins un coussin d'air (12a,...) puisse être guidé autour des tambours (4 et 6) sans que l'air ne doive être évacué de l'au moins un coussin d'air (12a,...).

6. Installation de bande de transport selon l'une quelconque des revendications 2 à 5,
**caractérisée en ce que**
le volume (V) de l'au moins un coussin d'air (12a,...) est divisé en plusieurs chambres horizontales (V₁,...), qui peuvent être sollicitées séparément par de l'air comprimé.

7. Installation de bande de transport selon l'une quelconque des revendications 1 à 6,
**caractérisée en ce que**
l'au moins une unité de levage (12a, ...) présente un cadre (16) pouvant être replié dans sa hauteur.

8. Installation de bande de transport selon l'une quelconque des revendications 6 à 7,
**caractérisée en ce**
**qu'**une position de levage fixe peut être programmée ou une variation de levée individuelle peut être ajustée pour chaque étape de travail.

9. Installation de bande de transport selon l'une quelconque des revendications 1 à 8,
**caractérisée en ce que**
la bande de transport (2) fait partie d'une installation de bande de glissement sur piste ou de bande de montage.
